(19) Europäisches Patentamt
European Patent Office
Office européen des brevets

(11) EP 4 105 021 A1

(12) **EUROPEAN PATENT APPLICATION**
published in accordance with Art. 153(4) EPC

(43) Date of publication:
**21.12.2022 Bulletin 2022/51**

(21) Application number: **21753930.3**

(22) Date of filing: **04.02.2021**

(51) International Patent Classification (IPC):
**B32B 27/30** (2006.01)    **C08K 5/3467** (2006.01)
**C08L 27/16** (2006.01)    **C08L 33/12** (2006.01)
**C08J 5/18** (2006.01)    **B29C 48/08** (2019.01)
**B29C 48/21** (2019.01)    **B29C 48/88** (2019.01)

(52) Cooperative Patent Classification (CPC):
**B29C 48/08; B29C 48/21; B29C 48/88;**
**B32B 27/30; C08J 5/18; C08K 5/3467; C08L 27/16;**
**C08L 33/12**

(86) International application number:
**PCT/JP2021/004177**

(87) International publication number:
**WO 2021/161899 (19.08.2021 Gazette 2021/33)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.02.2020 JP 2020020911**

(71) Applicant: **Denka Company Limited**
**Tokyo 103-8338 (JP)**

(72) Inventors:
• **BABA,Takumi**
  **Tokyo 103-8338 (JP)**
• **NAGAOKA,Kota**
  **Tokyo 103-8338 (JP)**
• **TAKANO,Keiji**
  **Tokyo 103-8338 (JP)**

(74) Representative: **Mewburn Ellis LLP**
**Aurora Building**
**Counterslip**
**Bristol BS1 6BX (GB)**

(54) **RESIN FILM AND METHOD FOR PRODUCING SAME**

(57)    Provided is a resin film containing a polyvinylidene fluoride-based resin which is highly transparent and less likely to be cloudy even when it is heated and cooled. A resin film is composed of a resin composition containing 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin, wherein a crystallinity of the resin composition is 15% to 35%; a ratio of $\alpha$-type crystal to a total mass of $\alpha$-type crystal and $\beta$-type crystal in the resin composition is 0 to 15% by mass; an average thickness of the resin film is 5 to 200 $\mu$m;and a HAZE measured according to JIS K7136: 2000 of the resin film is 20% or less.

| Polyvinylidene fluoride-based resin 50 to 80 parts by mass + Polymethacrylic acid ester-based resin 20 to 50 parts by mass |
| Polyvinylidene fluoride-based resin 0 to 30 parts by mass + Polymethacrylic acid ester-based resin 70 to 100 parts by mass |

110 — 5〜200μm
120 — 5〜300μm
100

FIG. 1

## Description

### FIELD OF THE INVENTION

The present invention relates to a resin film comprising a polyvinylidene fluoride-based resin and a method for producing the same. In particular, the present invention relates to a resin film comprising a polyvinylidene fluoride-based resin that can be suitably used for laminating on a substrate, and a method for producing the same.

### BACKGROUND OF THE INVENTION

A resin film comprising a polyvinylidene fluoride-based resin has excellent weather resistance and chemical resistance, and accordingly, it is suitably used for the outermost layer of a decorative film used for the interior or exterior of automobiles, electrical appliance members, and the like. A decorative film is generally produced through a process of bonding a decorative layer to a film of an outermost layer. As a bonding method, laminating using an adhesive and thermal laminating are common.

In recent years, designs have become more diversified and complicated, especially in automobile interiors, and the outermost layer of the decorative film is required to have high transparency so as not to impair the color and texture. Therefore, techniques for improving the transparency of a resin film comprising a polyvinylidene fluoride-based resin have been developed.

To provide a film with high crystallinity, transparency, and surface smoothness, Patent Literature 1 (WO 2011/142453) proposes a film, comprising a vinylidene fluoride resin (A) and an acrylic resin (B), wherein an arithmetic mean roughness of at least one surface is 0.1 to 20 nm, a heat of crystal fusion measured by a differential scanning calorimeter is 18 to 40 J/g, and a haze value is 3.5 or less.

Patent Literature 2 (Japanese Patent Application Publication No. 2012-187934) discloses that, by using a fluoro-(meth) acrylic resin comprising a fluorine-containing alkyl (meth) acrylate component, a novel fluororesin film that can be used for interior and exterior parts of vehicles and has excellent transparency, surface hardness, chemical resistance, and stain resistance has been successfully produced. Further, the literature specifically discloses a fluororesin laminated acrylic resin film in which a fluororesin film layer is laminated on at least one side of a film layer made of an acrylic resin (A), wherein the fluororesin film layer is formed by forming a fluororesin (C) comprising a fluoro-(meth) acrylic resin (B) comprising a fluororesin-containing alkyl (meth) acrylate polymer component.

Further, there are also known techniques for improving the characteristics of a resin film comprising a vinylidene fluoride resin by controlling the crystal type of the vinylidene fluoride resin.

Patent Literature 3 (WO 2019/107302) discloses a vinylidene fluoride resin-based multilayer film comprising two layers in which a front surface layer is laminated on a back surface layer, wherein the front surface layer comprises 80% by mass or more of vinylidene fluoride resin and 20% by mass or less of methacrylic acid ester-based resin; a crystallinity of the front surface layer is 45% or more, and a ratio of a crystal to a total crystal components of the vinylidene fluoride resin is 60% or more; the front surface layer has a thickness of 15 $\mu$m or more; and the back surface layer contains 90% by mass or more of a methacrylic acid ester-based resin. It is described that the film can suppress discoloration of the film due to acid rain and discoloration of the film due to formation of a polyene structure by a hindered amine-based light stabilizer contained in the decorative film for a long period of time under a high temperature and high humidity environment.

### PRIOR ART

Patent Literature

[Patent Literature 1] WO 2011/142453

[Patent Literature 2] Japanese Patent Application Publication No. 2012-187934

[Patent Literature 3] WO 2019/107302

### SUMMARY OF THE INVENTION

As described above, a decorative film is often produced through a step of laminating the decorative layer to the film of the outermost layer by thermal lamination. Further, as methods of surface-coating an automobile interior part with a decorative film, mention may be made to film insert molding, in-mold molding, vacuum laminating molding and the like. Among them, film insert molding has become the mainstream. Since film insert molding heats the decorative film to perform pre-forming, the decorative film conforms with parts having even more complicated shapes compared to in-mold molding and vacuum laminating molding, and there is an advantage that a good surface coating condition can be realized.

However, when a resin film comprising a polyvinylidene fluoride-based resin is used in a process involving heating and cooling such as thermal lamination and film insert molding, it has been found that there is a problem of white turbidity, and the appearance changes. The above-mentioned prior art lacks recognition of white turbidity, and there is room for improvement in a resin film comprising a polyvinylidene fluoride-based resin from the viewpoint of preventing white turbidity.

Therefore, in one embodiment, it is an object of the present invention to provide a resin film comprising a polyvinylidene fluoride-based resin which is highly transparent and less likely to be cloudy even when it is heated and cooled, and to provide a method for producing the same.

As a result of conducting various studies to solve the above problems, the present inventors have found that controlling the crystallinity and the ratio of $\alpha$-type crystal in the resin composition comprising a polyvinylidene fluoride-based resin is advantageous in preventing white turbidity of the resin film, and have arrived at the present invention exemplified below.

[1] A resin film composed of a resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin,

wherein a crystallinity of the resin composition is 15% to 35%;
a ratio of $\alpha$-type crystal to a total mass of $\alpha$-type crystal and $\beta$-type crystal in the resin composition is 0 to 15% by mass;
an average thickness of the resin film is 5 to 200 $\mu$m; and
a HAZE measured according to JIS K7136: 2000 of the resin film is 20% or less.

[2] The resin film according to [1], wherein an arithmetic average roughness Ra measured according to JIS B0601: 2001 on at least one surface is 100 nm or less.

[3] The resin film according to [1] or [2], wherein the HAZE measured according to JIS K7136: 2000 is 5% or less.

[4] The resin film according to any one of [1] to [3], wherein a total light transmittance measured according to JIS K7375: 2008 is 90% or more.

[5] The resin film according to any one of [1] to [4], wherein when it is heated in an air from 25 °C to 170 °C with an average temperature rise rate of 3.5 °C/sec, then placed in a temperature environment of 25 °C within 1 second after reaching 170 °C, and allowed to cool to 25 °C in the air, an amount of change of the HAZE ($\Delta$HAZE) measured according to JIS K7136: 2000 is 5% or less.

[6] A resin film, comprising

a front surface layer composed of a resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin; and
a back surface layer composed of a resin composition comprising 0 to 30 parts by mass of a polyvinylidene fluoride-based resin and 70 to 100 parts by mass of a polymethacrylic acid ester-based resin with respect to a total of 100 parts by mass of the polyvinylidene fluoride-based resin and the polymethacrylic acid ester-based resin,
wherein a crystallinity of the resin composition constituting the front surface layer is 15% to 35%;
a ratio of $\alpha$-type crystal to a total mass of $\alpha$-type crystal and $\beta$-type crystal in the resin composition constituting the front surface layer is 0 to 15% by mass;
an average thickness of the front surface layer is 5 to 200 $\mu$m;
an average thickness of the back surface layer is 5 to 300 $\mu$m; and
a HAZE measured according to JIS K7136: 2000 of the resin film is 20% or less.

[7] The resin film according to [6], wherein an arithmetic average roughness Ra measured according to JIS B0601: 2001 on at least one of an outer surface of the front surface layer and an outer surface of the back surface layer is 100 nm or less.

[8] The resin film according to [6] or [7], wherein the HAZE measured according to JIS K7136: 2000 is 5% or less.

[9] The resin film according to any one of [6] to [8], wherein a total light transmittance measured according to JIS K7375: 2008 is 90% or more.

[10] The resin film according to any one of [6] to [9], wherein when it is heated in an air from 25 °C to 170 °C with an average temperature rise rate of 3.5 °C/sec, then placed in a temperature environment of 25 °C within 1 second after reaching 170 °C, and allowed to cool to 25 °C in the air, an amount of change of the HAZE (ΔHAZE) measured according to JIS K7136: 2000 is 5% or less.

[11] The resin film according to any one of [6] to [10], wherein the resin composition constituting the back surface layer comprises 0.1 to 10 parts by mass of an ultraviolet absorber with respect to the total of 100 parts by mass of the polyvinylidene fluoride-based resin and the polymethacrylic acid ester-based resin.

[12] The resin film according to [11], wherein the ultraviolet absorber contains a triazine-based compound, a benzotriazole-based compound, or a mixture thereof.

[13] The resin film according to any one of [6] to [12], wherein the resin composition constituting the back surface layer comprises 0.1 to 10 parts by mass of crosslinked (meth) acrylic acid ester-based resin particles with respect to the total of 100 parts by mass of the polyvinylidene fluoride-based resin and the polymethacrylic acid ester-based resin.

[14] The resin film according to any one of [1] to [13], which is used for laminating with a substrate.

[15] The resin film according to [14], wherein a 60 ° specular glossiness measured according to JIS Z8741: 1997 on a surface of the substrate to be bonded to the resin film is 100 to 600, and an L* with an acceptance angle of 15 ° in an L*a*b* color space according to JIS Z8781-4: 2013 is 0 to 20.

[16] The resin film according to any one of [1] to [13], which is used for thermoforming.

[17] A method for producing a resin film, comprising:

a step of melt extruding a resin composition from a T-die into a film having an average thickness of 5 to 200 μm at a temperature of 200 °C to 260 °C, the resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin; and

within 6 seconds after extrusion from an outlet of the T-die, a step of bringing at least one surface of a melt extruded film into contact with a surface of a metal roll whose temperature is controlled to 30 to 50 °C for cooling.

[18] A method for producing a resin film, comprising:

a step of melt-coextruding a first resin composition and a second resin composition from a T-die into a film at a temperature of 200 °C to 260 °C such that an average thickness of the first resin composition is 5 to 200 μm and an average thickness of the second resin composition is 5 to 300 μm,

the first resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin,

the second resin composition comprising 0 to 30 parts by mass of a polyvinylidene fluoride-based resin and 70 to 100 parts by mass of a polymethacrylic acid ester-based resin with respect to a total of 100 parts by mass of the polyvinylidene fluoride-based resin and the polymethacrylic acid ester-based resin; and

within 6 seconds after extrusion from an outlet of the T-die, a step of bringing at least a surface on a side of the first resin composition of a melt-coextruded film into contact with a surface of a metal roll whose temperature is controlled to 30 to 50 °C for cooling.

[19] The method for producing a resin film according to [17] or [18], wherein an arithmetic average roughness Ra measured according to JIS B0601: 2001 on the surface of the metal roll is 100 nm or less.

According to one embodiment of the present invention, a resin film comprising a polyvinylidene fluoride-based resin which is highly transparent and less likely to be cloudy even when it is heated and cooled, can be obtained. Therefore, the resin film according to one embodiment of the present invention can be suitably used for a process involving heating and cooling such as film insert molding. The resin film can be used by being attached to a substrate, and can be used, for example, as an outermost layer of a decorative film.

**BRIEF DESCRIPTION OF THE DRAWINGS**

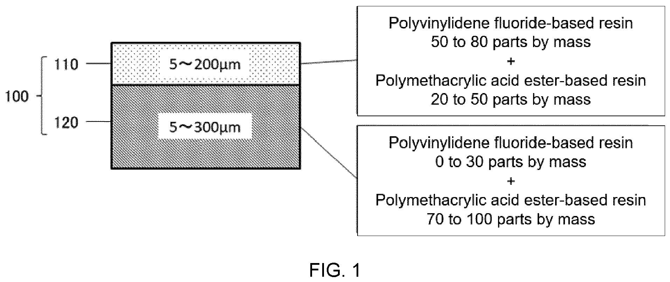

FIG. 1 is a schematic cross-sectional view showing a laminated structure of a resin film according to a second embodiment of the present invention.

**DETAILED DESCRIPTION OF THE INVENTION**

Hereinafter, embodiments of the present invention will be described. The embodiments described below are illustrative of typical embodiments of the invention and are not intended to narrow the technical scope of the invention.

(1. First embodiment)

The resin film according to the first embodiment can be composed of a resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin.

The crystallinity of the resin composition can be 15% to 35% in one embodiment. When the lower limit of the crystallinity is 15% or more, preferably 20% or more, excellent chemical resistance can be exhibited. Further, when the upper limit of the crystallinity is 35% or less, preferably 30% or less, the total amount of $\alpha$-type crystal can be suppressed, so that the effect of preventing white turbidity is enhanced.

In the present specification, the crystallinity of the resin composition is calculated as follows. From the spectrum measured according to JIS K7121: 2012, the enthalpy of crystal fusion (J/g) is calculated from the integrated value of the melting peak, and the crystallinity is calculated by the following formula: (Crystallinity (%)) = (Enthalpy of crystal fusion per unit mass of resin composition (J/g)) / (Enthalpy of crystal fusion per unit mass of PVDF crystal (J/g)) $\times$ 100 (%), provided that (Enthalpy of crystal fusion per unit mass of PVDF crystal) = 104.6 J/g.

From the viewpoint of preventing white turbidity, it is desirable that the ratio of $\alpha$-type crystal to the total mass of $\alpha$-type crystal and $\beta$-type crystal in the resin composition be small. Specifically, the ratio is preferably 0 to 15% by mass, more preferably 0 to 10% by mass, more preferably 0 to 8% by mass, and even more preferably 0 to 5% by mass.

In the present specification, the ratio of $\alpha$-type crystal to the total mass of $\alpha$-type crystal and $\beta$-type crystal in the resin composition is obtained by measuring the absorption intensity (peak height (a)) at the characteristic absorption wave number 765 cm$^{-1}$ of the $\alpha$-type crystal and the absorption intensity (peak height ($\beta$)) at the characteristic absorption wave number 840 cm$^{-1}$ of the $\beta$-type crystal from the infrared absorption spectrum of the resin composition obtained by a reflection method, and then calculating from the following formula:

$$\text{Ratio of } \alpha\text{-type crystal (\%)} = (\alpha) / ((\alpha) + (\beta)) \times 100 \text{ (\%)}$$

The thickness of the resin film according to the first embodiment is preferably 5 to 200 $\mu$m, more preferably 5 to 100 $\mu$m, further preferably 5 to 40 $\mu$m, and particularly preferably 10 to 20 $\mu$m. When the resin film is 5 $\mu$m or more, the film formability can be improved and the protective function when used as a surface layer can be improved, and by setting it to 200 $\mu$m or less, white turbidity becomes inconspicuous, transparency can be improved, and cost reduction can be realized. The resin film according to the first embodiment may be formed of a single layer or a plurality of layers, but it is desirable that the total average thickness be within the above-mentioned thickness range.

From the viewpoint of enhancing transparency, the HAZE measured according to JIS K7136: 2000 of the resin film according to the first embodiment is preferably 20% or less, more preferably 10% or less, even more preferably 5% or less, most preferably 2% or less, and can be, for example, in the range of 0.1 to 20%.

The resin film according to the first embodiment can have a feature that the HAZE change before and after heating is small. For example, when it is heated in the air from 25 °C to 170 °C with an average temperature rise rate of 3.5 °C/sec, then placed in a temperature environment of 25 °C within 1 second after reaching 170 °C, and allowed to cool to 25 °C in the air, an amount of change of the HAZE ($\Delta$HAZE) measured according to JIS K7136: 2000 can be 5% or less, preferably 3% or less, more preferably 1% or less, and can be, for example, 0.5 to 5%. $\Delta$HAZE is represented by $\Delta$HAZE (%) = | HAZEa-HAZEb |, where the HAZE value before heating is HAZEb (%) and the HAZE value after heating is HAZEa (%).

From the viewpoint of enhancing transparency, the total light transmittance measured according to JIS K7375: 2008 of the resin film according to the first embodiment is preferably 80% or more, preferably 85% or more, more preferably 90% or more, and can be, for example, 80 to 95%.

From the viewpoint of enhancing transparency, the arithmetic average roughness Ra measured according to JIS B0601: 2001 on at least one surface, preferably both surfaces, of the resin film according to the first embodiment are preferably 100 nm or less, preferably 90 nm or less, and can be, for example, 70 to 100 nm.

As to the mixing ratio of the polyvinylidene fluoride-based resin and the polymethacrylic acid ester-based resin in the resin composition constituting the resin film according to the first embodiment, with respect to a total of 100 parts by mass of both, polyvinylidene fluoride-based resin : polymethacrylic acid ester-based resin = 50 to 80 parts by mass : 20 to 50 parts by mass is preferable, 60 to 75 parts by mass : 25 to 40 parts by mass is more preferable. When the polyvinylidene fluoride-based resin is 50 parts by mass or more with respect to 100 parts by mass in total of the polyvinylidene fluoride-based resin and the polymethacrylic acid ester-based resin, the characteristics such as chemical resistance, weather resistance and stain resistance can be improved. Further, by containing a small amount of the polymethacrylic acid ester-based resin in the resin film, it is possible to prevent the ratio of $\alpha$-type crystal from increasing, and when the resin film according to the first embodiment is used as a front surface layer by laminating it on a back surface layer, which is described later, the adhesiveness and contact can be improved.

In addition to the polyvinylidene fluoride-based resin and the polymethacrylic acid ester-based resin, the resin composition constituting the resin film according to the first embodiment can appropriately contain other resins, plasticizers, heat stabilizers, antioxidants, light stabilizers, crystal nucleating agents, blocking inhibitors, sealability improving agents, mold release agents, colorants, pigments, foaming agents, flame retardants, and the like, to the extent that the object of the present invention is not impaired. However, in general, the total content of the polyvinylidene fluoride-based resin and the polymethacrylic acid ester-based resin in the resin composition constituting the resin film is 80% by mass or more, and typically 90% by mass or more, more typically 95% by mass or more, and even can be 100% by mass. The resin composition constituting the resin film according to the first embodiment may contain an ultraviolet absorber, but it is preferable not to contain it from the viewpoint of cost and bleed-out.

As used in the present specification, the polyvinylidene fluoride-based resin refers to a homopolymer of vinylidene fluoride, as well as a copolymer of vinylidene fluoride and a monomer copolymerizable with vinylidene fluoride. Examples of the monomer copolymerizable with vinylidene fluoride include vinyl fluoride, ethylene tetrafluoride, propylene hexafluoride, isobutylene hexafluoride, ethylene trifluoride, various fluoro alkyl vinyl ethers, as well as known vinyl monomers such as styrene. ethylene, butadiene, propylene, and the like, and these can be used alone or in combination of two or more. Among these, at least one selected from vinyl fluoride, ethylene tetrafluoride, propylene hexafluoride and ethylene trifluoride chloride is preferable, and propylene hexafluoride is more preferable.

Examples of the polymerization reaction for obtaining the polyvinylidene fluoride-based resin include known polymerization reactions such as radical polymerization and anionic polymerization. In addition, examples of the polymerization method include known polymerization methods such as suspension polymerization and emulsion polymerization. The crystallinity, mechanical properties, and the like of the obtained resin change depending on the polymerization reaction and/or the polymerization method.

The lower limit of the melting point of the polyvinylidene fluoride-based resin is preferably 150 °C or higher, more preferably 160 °C or higher. The upper limit of the melting point of the polyvinylidene fluoride-based resin is preferably 170 °C or lower, which is equal to the melting point of polyvinylidene fluoride (PVDF).

The lower limit of the glass transition point (Tg) of the polymethacrylic acid ester-based resin is preferably 70 °C or higher, more preferably 80 °C or higher. The upper limit of Tg of the polymethacrylic acid ester-based resin is preferably 120 °C or lower.

The melting point of the polyvinylidene fluoride-based resin and the Tg of the polymethacrylic acid ester-based resin can be measured by heat flux differential scanning calorimetry (heat flux DSC). For example, it can be measured from a DSC curve (first run), which is obtained when heating from room temperature to 200 °C with a sample mass of 1.5 mg and a temperature rise rate of 10 °C/min using a differential scanning calorimetry device DSC3100SA available from Bruker AXS.

In the present specification, the polymethacrylic acid ester-based resin refers to a homopolymer of a methacrylic acid ester such as methyl methacrylate, as well as a copolymer of a methacrylic acid ester and a monomer copolymerizable with the methacrylic acid ester, which have a particle size of less than 1 $\mu$m in the resin film (including those having a particle size that is so fine that the particle size cannot be specified and those forming a matrix phase). Conversely, resin particles having a particle size of 1 $\mu$m or more in the resin film are not regarded as the polymethacrylic acid ester-based resin in the present specification. The particle size of a resin particle refers to a diameter of the smallest circle that can surround the resin particle in a cross section of the resin film observed with a confocal laser microscope (for example, VK-X110 available from KEYENCE) at a magnification of 2000 times in a state where the resin film is fixed by sandwiching it with a small metal vise, and the cross section of the resin film is smoothed by cutting with a single-edged knife.

As a monomer copolymerizable with methacrylic acid ester, mention can be made to (meth) acrylic acid esters such as butyl acrylate, butyl methacrylate, ethyl acrylate, ethyl methacrylate; aromatic vinyl monomers such as styrene, $\alpha$-methylstyrene, p-methylstyrene, o-methylstyrene, t-butylstyrene, divinylbenzene , tristyrene; vinyl cyanide monomers such as acrylonitrile and methacrylonitrile; glycidyl group-containing monomers such as glycidyl (meth) acrylate; vinyl carboxylic acid-based monomers such as vinyl acetate and vinyl butyrate; olefin-based monomers such as ethylene, propylene and isobutylene; diene-based monomers such as 1,3-butadiene and isoprene; unsaturated carboxylic acid-based monomers such as maleic acid, maleic anhydride, and (meth) acrylic acid; enone-based monomers such as vinyl methyl ketone. These can be used alone or in combination of two or more. Among these, for reasons of compatibility with polyvinylidene fluoride-based resin, film strength, adhesiveness and contact to the back surface layer, it is preferable to use a homopolymer of methyl methacrylate, or an acrylic rubber-modified acrylic-based copolymer obtained by copolymerizing an acrylic rubber mainly composed of butyl methacrylate with a monomer mainly composed of methyl (meth) acrylate.

As a copolymer, mention can be made to random copolymers, graft copolymers, block copolymers (for example, linear types such as diblock copolymers, triblock copolymers, and gradient copolymers, star-type copolymers polymerized by the arm-first method or the core-first method), copolymers (macromonomer copolymer) obtained by polymerization using a macromonomer which is a polymer compound having a polymerizable functional group, and a mixture thereof, and the like. Among these, graft copolymers and block copolymers are preferable from the viewpoint of resin productivity.

Examples of the polymerization reaction for obtaining a polymethacrylic acid ester-based resin include known polymerization reactions such as radical polymerization, living radical polymerization, living anion polymerization, and living cationic polymerization. In addition, examples of the polymerization method include known polymerization methods such as bulk polymerization, suspension polymerization, emulsion polymerization, and solution polymerization. The mechanical properties of the obtained resin change depending on the polymerization reaction and the polymerization method.

The resin film according to the first embodiment can be produced by carrying out the following steps, for example.

Step 1: a step of melt extruding a resin composition from a T-die into a film having an average thickness of 5 to 200 $\mu$m at a temperature of 200 °C to 260 °C, the resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin.

Step 2: within 6 seconds after the extrusion from the outlet of the T-die, a step of bringing at least one surface of the melt extruded film into contact with a surface of a metal roll whose temperature is controlled to 30 to 50 °C for cooling.

From the viewpoint of controlling the crystallinity of the resin composition within an appropriate range and reducing the ratio of $\alpha$-type crystal, it is desirable to rapidly cool the molten resin composition which has been extruded from the T-die at a temperature of 200 °C to 260 °C. Specifically, within 6 seconds and preferably within 4 seconds after the resin composition is extruded into a film from the outlet of the T-die, it is desirable to bring it into contact with the surface of a metal roll whose temperature is controlled to 30 to 50 °C, preferably 40 to 45 °C. Since $\alpha$-type crystal is likely to form and grow at around 140 °C, the temperature can rapidly pass around 140 °C by rapidly cooling under the above conditions, so that the formation of $\alpha$-type crystal can be effectively suppressed. Examples of the method for controlling the temperature of the surface of the metal roll include a method of flowing a cooling medium such as cooling water in the metal roll.

Examples of the melt extrusion molding method include a T-die method for forming a film using a T-die and a method using an inflation die. Upon cooling, from the viewpoint of transferring the smooth surface of the metal roll to the film, it is more preferable to place a rubber touch roll facing the metal roll, and pinch the molten resin composition extruded from the outlet of the die between the metal roll (cast roll) and the touch roll.

From the viewpoint of reducing the surface roughness of the resin film, it is desirable that the surface roughness of the metal roll be small, and it is also desirable that the surface roughness of the touch roll be also small. This is because the surface roughness of the metal roll and the touch roll is reflected in the surface roughness of the resin film. Therefore, the arithmetic average roughness Ra measured according to JIS B0601: 2001 on the surface of the metal roll is preferably 100 nm or less, more preferably 80 nm or less, even more preferably 60 nm or less, even more preferably 40 nm or less, even more preferably 20 nm or less, and can be for example, 10 to 100 nm. The arithmetic average roughness Ra measured according to JIS B0601: 2001 on the surface of the touch roll is preferably 150 nm or less, more preferably 120 nm or less, and can be, for example, 100 to 150 nm.

(2. Second embodiment)

FIG. 1 shows a schematic cross-sectional view showing a laminated structure of the resin film (100) according to a second embodiment. The resin film (100) comprises at least a front surface layer (110) and a back surface layer (120) laminated on the front surface layer (110) in this order. Typically, the front surface layer (110) and the back surface layer (120) are directly bonded to each other without any other resin layer interposed therebetween.

From the viewpoint of enhancing transparency, the HAZE measured according to JIS K7136: 2000 of the resin film according to the second embodiment is preferably 20% or less, more preferably 10% or less, even more preferably 5% or less, most preferably 2% or less, and can be, for example, in the range of 0.1 to 20%.

The resin film according to the second embodiment can have a feature that the HAZE change before and after heating is small. For example, when it is heated in the air from 25 °C to 170 °C with an average temperature rise rate of 3.5 °C/sec, then placed in a temperature environment of 25 °C within 1 second after reaching 170 °C, and allowed to cool to 25 °C in the air, an amount of change of the HAZE ($\Delta$HAZE) measured according to JIS K7136: 2000 can be 5% or less, preferably 3% or less, more preferably 1% or less, and can be, for example, 0.5 to 5%. $\Delta$HAZE is represented by $\Delta$HAZE (%) = | HAZEa-HAZEb |, where the HAZE value before heating is HAZEb (%) and the HAZE value after heating is HAZEa (%).

From the viewpoint of enhancing transparency, the total light transmittance measured according to JIS K7375:

2008 of the resin film according to the second embodiment is preferably 80% or more, preferably 85% or more, more preferably 90% or more, and can be, for example, 80 to 95%.

From the viewpoint of enhancing transparency, in the resin film according to the second embodiment, the arithmetic average roughness Ra measured according to JIS B0601: 2001 on at least one, preferably both, of the outer surface of the front surface layer and the outer surface of the back surface layer are preferably 100 nm or less, preferably 90 nm or less, and can be, for example, 70 to 100 nm.

The front surface layer can be composed of a resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin. Regarding the embodiments of the resin composition constituting the front surface layer, since the same description as that for the embodiments of the resin composition constituting the resin film according to the first embodiment, including the composition, crystallinity, ratio of $\alpha$-type crystal, thickness, HAZE, and total light transmittance, can be applied herein, the explanation thereof is omitted.

The thickness of the back surface layer is preferably 5 to 300 $\mu$m, more preferably 5 to 100 $\mu$m, even more preferably 10 to 75 $\mu$m, and particularly preferably 25 to 35 $\mu$m. When the back surface layer is 5 $\mu$m or more, the film formability can be improved, and the adhesiveness at the time of thermal laminating, which will be described later, can be improved. By setting it to 300 $\mu$m or less, it is possible to improve thermal formability and transparency and reduce costs. The back surface layer may be formed of a single layer or a plurality of layers, but it is desirable that the total average thickness is within the above-mentioned thickness.

The back surface layer can be composed of a resin composition comprising 0 to 30 parts by mass of a polyvinylidene fluoride-based resin and 70 to 100 parts by mass of a polymethacrylic acid ester-based resin with respect to a total of 100 parts by mass of the polyvinylidene fluoride-based resin and the polymethacrylic acid ester-based resin.

As to the mixing ratio of the polyvinylidene fluoride-based resin and the polymethacrylic acid ester-based resin in the resin composition constituting the back surface layer, with respect to a total of 100 parts by mass of both, polyvinylidene fluoride-based resin : polymethacrylic acid ester-based resin = 0 to 30 parts by mass : 70 to 100 parts by mass is preferable, 20 to 30 parts by mass : 70 to 80 parts by mass is more preferable. When the polymethacrylic acid ester-based resin is 70 parts by mass or more with respect to 100 parts by mass in total of the polyvinylidene fluoride-based resin and the polymethacrylic acid ester-based resin, it is possible to improve the contact to other layers such as the decorative layer described later. Further, by containing a small amount of polyvinylidene fluoride-based resin in the back surface layer, weather resistance, adhesiveness and contact to the front surface layer can be improved.

Regarding the types, melting points and polymerization reactions of the polyvinylidene fluoride-based resin and the polymethacrylic acid ester-based resin in the resin composition constituting the back surface layer, since the same description as that for the polyvinylidene fluoride-based resin and the polymethacrylic acid ester-based resin in the resin composition constituting the front surface layer can be applied, the description thereof is omitted.

Since the content of the polyvinylidene fluoride-based resin in the resin composition constituting the back surface layer is small, it is typical that neither $\alpha$-type crystal or $\beta$-type crystal is generated in the back surface layer. Therefore, in the back surface layer, it is not necessary to specify the crystallinity and the ratio of $\alpha$-type crystal.

In addition to the polyvinylidene fluoride-based resin ad the polymethacrylic acid ester-based resin, the resin composition constituting the back surface layer can appropriately contain ultraviolet absorbers, other resins, plasticizers, heat stabilizers, antioxidants, light stabilizers, crystal nucleating agents, blocking inhibitors, sealability improving agents, mold release agents, colorants, pigments, foaming agents, flame retardants, and the like, to the extent that the object of the present invention is not impaired. However, in general, the total content of the polyvinylidene fluoride-based resin and the polymethacrylic acid ester-based resin in the back surface layer is 80% by mass or more, and typically 90% by mass or more, more typically 95% by mass or more, and even can be 100% by mass.

The resin composition constituting the back surface layer preferably contains an ultraviolet absorber. When the resin composition constituting the back surface layer contains an ultraviolet absorber, ultraviolet rays are blocked and weather resistance can be effectively enhanced. Examples of the-based ultraviolet absorber include, but are not limited to, hydroquinone-based, triazine-based, benzotriazole-based, benzophenone-based, cyanoacrylate-based, oxalic acid-based, hindered amine-based, and salicylic acid derivatives. These can be used alone or in combination of two or more. Among these, it is preferable to contain a triazine-based compound, a benzotriazole-based compound, or a mixture thereof from the viewpoint of sustaining the ultraviolet blocking effect.

The content of the ultraviolet absorber in the resin composition constituting the back surface layer is preferably 0.1 to 10 parts by mass with respect to 100 parts by mass in total of the polyvinylidene fluoride-based resin and the polymethacrylic acid ester-based resin of the back surface layer. With respect to 100 parts by mass in total of the polyvinylidene fluoride-based resin and the polymethacrylic acid ester-based resin, by setting the content of the ultraviolet absorber in the resin composition constituting the back surface layer to 0.1 parts by mass or more, preferably 1 part by mass or more, and more preferably 2 parts by mass or more, an effect of further improving weather resistance, along with an effect of absorbing ultraviolet rays can be expected. In addition, with respect to 100 parts by mass in total of the polyvinylidene fluoride-based resin and the polymethacrylic acid ester-based resin, by setting the content of the ultraviolet absorber in the resin composition constituting the back surface layer to 10 parts by mass or less, and preferably 5 parts by mass or less, it is possible to prevent the ultraviolet absorber from bleeding out to the film surface, prevent deterioration of contact to the surface layer, and realize cost reduction.

The resin composition constituting the back surface layer may contain crosslinked (meth) acrylic acid ester-based resin particles. When the resin composition constituting the back surface layer contains a small amount of crosslinked (meth) acrylic acid ester-based resin particles, it becomes possible to produce a resin film having a slightly white turbidity and thus small change in appearance. By using a resin film with slight white turbidity from the beginning, a wider range of design expressions is possible. The content of the crosslinked (meth) acrylic acid ester-based resin particles in the resin composition constituting the back surface layer is preferably 0.1 to 10 with respect to 100 parts by mass in total of the polyvinylidene fluoride-based resin and the polymethacrylic acid ester-based resin. Examples of the cross-linked (meth) acrylic acid ester-based resin particles include, but are not limited to, cross-linked polymethyl methacrylate, cross-linked polyethyl methacrylate, and cross-linked polynormal butyl methacrylate. These can be used alone or in combination of two or more. Among these, it is preferable to contain polymethyl methacrylate because the difference in refractive index from the back surface layer is small.

In the present specification, the crosslinked (meth) acrylic acid ester-based resin particles refer to those having a particle size of 1 $\mu$m or more in the resin film. The particle size of a resin particle refers to the diameter of the smallest circle that can surround the resin particles when the resin film is observed by the method described above. Therefore, even there are crosslinked (meth) acrylic acid ester-based resin particles having a particle size of less than 1 $\mu$m in the resin film, if the definition regarding the polymethacrylic acid ester-based resin described above is satisfied, it corresponds to the polymethacrylic acid ester-based resin.

The arithmetic average particle size of the crosslinked (meth) acrylic acid ester-based resin particles in the resin film is preferably 1 to 4 $\mu$m, more preferably 1.5 to 3.5 $\mu$m, from the viewpoint of film appearance and film formability.

The laminate in which the front surface layer and the back surface layer are laminated can be produced by, for example, a melt coextrusion molding method in which a plurality of resins is adhered and laminated in a molten state using a plurality of extrusion molding machines. The melt coextrusion molding method includes a multi-manifold die technique in which each layer is contact-bonded at the tip inside the T-die after making a plurality of resins into a sheet state; a feed block die technique that spreads a plurality of resins into a sheet after bonding in a merging device (feed block); and a dual slot die technique in which a plurality of resins is formed into a sheet and then the layers are brought into contact with each other at the tip outside of the T-die and bonded. It can also be produced by an inflation molding method using a round die.

The resin film according to the second embodiment can be produced by carrying out the following steps, for example.

Step 1: a step of melt coextruding a first resin composition and a second resin composition from a T-die into a film at a temperature of 200 °C to 260 °C such that an average thickness of the first resin composition is 5 to 200 $\mu$m and an average thickness of the second resin composition is 5 to 300 $\mu$m,

the first resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin,
the second resin composition comprising 0 to 30 parts by mass of a polyvinylidene fluoride-based resin and 70 to 100 parts by mass of a polymethacrylic acid ester-based resin with respect to a total of 100 parts by mass of the polyvinylidene fluoride-based resin and the polymethacrylic acid ester-based resin.

Step 2: within 6 seconds after extrusion from an outlet of the T-die, a step of bringing at least a surface on a side of the first resin composition of a melt coextruded film into contact with a surface of a metal roll whose temperature is controlled to 30 to 50 °C for cooling.

From the viewpoint of controlling the crystallinity of the first resin composition within an appropriate range and reducing the ratio of $\alpha$-type crystal, it is desirable to rapidly cool, from the surface on the side of the first resin composition, the laminate of the first resin composition and the second resin composition in a molten state which has been extruded into a film from a T die at a temperature of 200 °C to 260 °C. Specifically, after being extruded from the outlet of the T-die, it is desirable to, within 6 seconds, and preferably within 4 seconds, bring at least the surface of the melt coextruded film on the side of the first resin composition into contact with the surface of a metal roll whose temperature is controlled to 30 to 50 °C, preferably 40 to 45 °C. Examples of the method for controlling the temperature of the surface of the metal roll include a method of flowing a cooling medium such as cooling water in the metal roll.

Upon cooling, from the viewpoint of transferring the smooth surface of the metal roll to the film, it is more preferable to place a rubber touch roll facing the metal roll, and pinch the laminate of the first resin composition and the second resin composition in the molten state extruded from the outlet of the T-die between the metal roll (cast roll) and the touch roll.

From the viewpoint of reducing the surface roughness of the resin film, it is desirable that the surface roughness of the metal roll be small, and it is also desirable that the surface roughness of the touch roll be also small. This is because the surface roughness of the metal roll and the touch roll is reflected in the surface roughness of the resin film. Therefore, the arithmetic average roughness Ra measured according to JIS B0601: 2001 on the surface of the metal roll is preferably 100 nm or less, more preferably 80 nm or less, even more preferably 60 nm or less, even more preferably 40 nm or less, even more preferably 20 nm or less, and can be for example, 10 to 100 nm. The arithmetic average roughness Ra measured according to JIS B0601: 2001 on the surface of the touch roll is preferably 150 nm or less, more preferably 120 nm or less, and can be, for example, 100 to 150 nm.

(3. Resin film laminated on substrate)

A substrate may be laminated on each of the resin films according to the first embodiment and the second embodiment. Accordingly, in one embodiment, the present invention provides a resin film in which a substrate is laminated on either oner surface of the resin film according to the first embodiment. Further, in another embodiment, the present invention provides a resin film in which a substrate is laminated on the front surface layer and/or the back surface layer of the resin film according to the second embodiment. It is preferable in terms of workability of bonding process to automobile interior parts and cost if the average value of the total thickness of the resin film on which the substrate is laminated is 50 to 1000 $\mu$m.

Examples of the substrate include layers such as a decorative layer, a protective layer, an adhesive layer, a print layer, and a metal vapor deposition layer. As the substrate, one type may be used as a single layer, or two or more types may be used in combination by lamination. In a typical embodiment, a resin film in which a decorative layer is laminated on the back surface layer of the resin film according to the second embodiment is provided. Further, in another typical embodiment, a resin film in which a print layer is formed on the back surface layer of the resin film according to the second embodiment and another substrate (a decorative layer or the like) is laminated on the print layer is provided. As the decorative layer, for example, an acrylic-based resin, a polycarbonate resin, a polyvinyl chloride-based resin, a polyester-based resin, or a resin composition comprising these resins can be used. Further, an additive such as a pigment can be appropriately added to the decorative layer.

Further, the resin film according to the first embodiment and the second embodiment can be multilayered with films such as isotactic or syndiotactic polypropylene, high density polyethylene, low density polyethylene, polystyrene, polyethylene terephthalate, ethylene-vinyl acetate copolymer (EVA), and the like, as a layer other than the decorative layer. It is also possible to perform various decoration treatments such as embossing.

As described above, the resin films according to the first embodiment and the second embodiment can have high transparency and are less likely to be cloudy. Therefore, by applying the resin film to the surface of a substrate having high brightness and glossiness in which white turbidity is conspicuous, this characteristic can be effectively exploited. Therefore, in one preferred embodiment, a 60 ° specular glossiness measured according to JIS Z8741: 1997 on a surface of the substrate to be bonded to the resin film is 100 to 600, typically 300 to 550, and an L* with an acceptance angle of 15 ° in an L*a*b* color space according to JIS Z8781-4: 2013 is 0 to 20, typically 0 to 5.

Examples of the method of laminating the substrate on the resin films according to the first embodiment and the second embodiment include adhesive laminating and thermal laminating. Other known laminating methods can also be adopted. Further, the resin film according to the first embodiment and the second embodiment can be subjected to thermoforming. Examples of the method of thermoforming include a method of laminating a substrate on one side or both sides of a resin film, followed by vacuum forming, pressure forming, and vacuum & pressure forming.

As methods of surface-coating an article such as an automobile interior part with a decorative film, for example, film insert molding, in-mold forming, and vacuum laminating forming (including vacuum & pressure forming such as TOM forming) can be mentioned. Among them, since film insert molding heats the decorative film to perform pre-forming, the decorative film can conform to parts with more complicated shapes compared to in-mold forming and vacuum laminating forming, and there is an advantage that a good surface coating condition can be realized. Although film insert molding involves heating and cooling, the resin films according to the first embodiment and the second embodiment are less likely to be cloudy even when heated and cooled, so that film insert molding can be suitably applied.

**EXAMPLES**

Hereinafter, the present invention will be described in detail based on Examples while comparing with Comparative Examples.

<1. Single layer film>

(1-1. Materials)

As a polyvinylidene fluoride-based resin (PVDF), a trade name Kynar 1000HD (PVDF homopolymer having a melting point of 168 °C) available from Arkema Co., Ltd. was prepared.

As a polymethacrylic acid ester-based resin (PMMA), SUMIPEX MGSS (polymethylmethacrylate with Tg of 101 °C) available from Sumitomo Chemical Co., Ltd. was prepared.

(1-2. Preparation of film)

According to the test number, each compound was obtained after kneading with a twin-screw extruder of φ30 mm according to the composition shown in Table 1. Each of the obtained compounds was melt extruded using a T-die type single-screw extruder of φ40 mm, and the extruded film-shaped resin composition was sandwiched by a metal roll in which cooling water flowed and a rubber touch roll for cooling, thereby obtaining a film having a predetermined average thickness shown in Table 1. At this time, the temperature of the resin composition at the outlet (lip) of the T-die was 210 °C, and the time until one surface of the film was brought into contact with the surface of the metal roll after extrusion from the outlet of the T-die was fixed to 4 seconds. By changing the surface temperature of the metal roll ("Metal roll temperature" in the table), the crystallinity and the ratio of α-type crystal of the resin composition constituting the film were controlled. Further, in Comparative Example 6, the surface roughness of the contact surface of the film with the touch roll was changed by changing the surface roughness of the touch roll.

(1-3. Average film thickness)

For each film (length 800 mm in the width direction) prepared under the above conditions, the cross section of the film was observed at a magnification of 2000 times using a laser microscope (VK-X100 available from Keyence), and the thickness of the film was measured based on the distance between the two points. The measurement was performed at 17 points in the film width direction (TD) at intervals of 50 mm at an arbitrary one location in the flow direction (MD), and the average value was taken as the measured value. The results are shown in Table 1.

(1-4. Surface roughness)

For each film prepared under the above conditions, the arithmetic mean roughness Ra according to JIS B0601: 2001 on both sides of the film was measured. For the measurement of the arithmetic mean roughness Ra, a laser microscope (VK-X100 available from KEYENCE) was used, and the film surface was used at a magnification of 1000 times. The results are shown in Table 1. In addition, the arithmetic average roughness Ra on the surface of the metal roll according to JIS B0601: 2001 was measured by a contact type surface roughness meter (SJ210 available from Mitutoyo Corporation) and found to be 0.013 μm. The arithmetic average roughness Ra on the surface of the touch roll according to JIS B0601: 2001 was measured by a contact type surface roughness meter (SJ210 available from Mitutoyo Corporation) and found to be 0.116 μm (however, in Comparative Example 6, it was 3.712 μm).

(1-5. Crystallinity)

The crystallinity of the resin composition constituting each film prepared under the above conditions was measured based on the enthalpy of crystal fusion by the method described above. For the conditions of the measurement of the enthalpy of crystal fusion, a DSC (DSC3100SA available from BRUKER) was used, and a 1.5 mg sample of the film was sealed in an aluminum pan and heated from room temperature to 200 °C at a temperature rise rate of 10 °C/min. The results are shown in Table 1.

(1-6. α-type crystal ratio)

For the resin composition constituting each film prepared under the above conditions, the ratio of α-type crystal was measured based on the infrared absorption spectrum by the method described above. The infrared absorption spectrum was measured using FT-IR (FT/IR4600) available from JASCO Corporation under the condition of 64 times of integration. The results are shown in Table 1.

(1-7. Total light transmittance)

For each film prepared under the above conditions, a haze meter NDH7000 (available from NIPPON DENSHOKU INDUSTRIES Co., LTD) was used to determine the total light transmittance according to JIS K7375: 2008. The results are shown in Table 1.

(1-8. HAZE)

For each film prepared under the above conditions, a haze meter NDH7000 (available from NIPPON DENSHOKU INDUSTRIES Co., LTD) was used to measure the HAZE value (before heating) according to JIS K7136: 2000 at 25 °C. Next, each film prepared under the above conditions was heated in the air from 25 °C to 170 °C at an average temperature rise rate of 3.5 °C/sec, and within 1 second after reaching 170 °C, it was placed in a temperature environment of 25 °C and allowed to cool to 25 °C in the air. For the film that had been heated and cooled, the HAZE value (after heating) according to JIS K7136: 2000 was measured using a haze meter NDH7000 (available from NIPPON DENSHOKU INDUSTRIES Co., LTD). The results are shown in Table 1.

(1-9. Resistance to white turbidity)

For each film prepared under the above conditions, it was heated in the air to 170 °C at an average temperature rise rate of 3.5 °C/sec, and within 1 second after reaching 170 °C, it was placed in a temperature environment of 25 °C and allowed to cool to 25 °C in the air. The degree of white turbidity of the film before and after the heating was visually evaluated according to the following criteria. The results are shown in Table 1.

Circle (∘): ... white turbidity could not be confirmed
Cross (x): ... white turbidity was confirmed

(1-10. Chemical resistance 1)

Each film prepared under the above conditions was cut into a 10 cm square, and 5 g of chemicals (sunscreen cream, trade name: Neutrogena Ultra Sheer SPF45) was applied to the surface of the film on the side which had been in contact with the surface of the metal roll. After left to stand at 55 °C for 4 hours, it was wiped off to check the appearance. The evaluation was performed according to the following criteria. The results are shown in Table 1.

Double circle (◎): no change in appearance
Circle (∘): there were slight traces of chemical adhesion or slight wrinkles.
Cross (x): the film became cloudy, or greatly deformed.

(1-11. Chemical resistance 2)

For each film prepared under the above conditions, 0.2 mL of chemicals (engine oil, trade name: HONDA Ultra U) was dropped onto the surface on the side which had been in contact with the surface of the metal roll. After left to stand at room temperature for 1.5 hours, it was wiped off, and then left to stand at 80 °C for 3 hours, and then the appearance was checked. The evaluation was performed according to the following criteria. The results are shown in Table 1.

Double circle (◎): no change in appearance
Circle (∘): there were slight traces of chemical adhesion or slight wrinkles.
Cross (x): the film became cloudy, or greatly deformed.

(1-12. Film formability)

The film formability of each film prepared under the above conditions was evaluated according to the following criteria. The results are shown in Table 1.

Double circle (◎): no problem at all
Circle (◯): the film was not stout enough, resulting in poor winding
Cross (x): difficult to form the film due to perforation or breakage of the film

Table 1-1

| | | | Example 1 | Example 2 | Example 3 | Example 4 | Example 5 | Example 6 |
|---|---|---|---|---|---|---|---|---|
| Composition | PVDF [parts by mass] | Kynar 1000 HD | 70 | 80 | 60 | 50 | 70 | 70 |
| | Polymethacrylic acid ester-based resin [parts by mass] | SUMIPEX MGSS | 30 | 20 | 40 | 50 | 30 | 30 |
| | Metal roll temperature [°C] | | 45 | 45 | 45 | 45 | 45 | 45 |
| Average thickness | [μm] | | 13 | 13 | 13 | 13 | 5 | 200 |
| Surface roughness | Ra [nm] on the surface in contact with the metal roll | | 80 | 82 | 76 | 72 | 80 | 78 |
| | Ra [nm] on the surface in contact with the touch roll | | 103 | 108 | 96 | 97 | 92 | 110 |
| Crystal structure | Crystallinity [%] | | 21 | 24 | 19 | 16 | 21 | 24 |
| | $\alpha$-type crystal ratio [mass%] | | 7 | 13 | 0 | 0 | 5 | 12 |
| Optical properties | Total light transmittance [%] | | 93.4 | 93.3 | 93.4 | 93.4 | 93.4 | 93.1 |
| | HAZE [%] before heating | | 1.1 | 1.2 | 0.8 | 0.5 | 0.2 | 1.5 |
| | HAZE [%] after heating | | 1.7 | 2 | 1.4 | 1.1 | 0.8 | 2.4 |
| | $\Delta$HAZE [%] | | 0.6 | 0.8 | 0.6 | 0.6 | 0.6 | 0.9 |
| Evaluation | White turbidity during heating | | ○ | ○ | ○ | ○ | ○ | ○ |
| | Chemical resistance | Neutrogena Ultra Sheer SPF45 | ◎ | ◎ | ◎ | ◎ | ◎ | ◎ |
| | | Engine oil HONDA Ultra U | ◎ | ◎ | ◎ | ◎ | ◎ | ◎ |
| | Film formability | | ◎ | ◎ | ◎ | ◎ | ○ | ○ |

Table 1-2

| | | | Compartive Example 1 | Compartive Example 2 | Compartive Example 3 | Compartive Example 4 | Compartive Example 5 | Compartive Example 6 | Compartive Example 7 |
|---|---|---|---|---|---|---|---|---|---|
| Composition | PVDF [parts by mass] | Kynar 1000 HD | 100 | 90 | 70 | 70 | 20 | 70 | 80 |
| | Polymethacrylic acid ester-based resin [parts by mass] | SUMIPEX MGSS | 0 | 10 | 30 | 30 | 80 | 30 | 20 |
| | Metal roll temperature [°C] | | 45 | 45 | 45 | 45 | 45 | 45 | 65 |
| Average thickness | [μm] | | 13 | 13 | 3 | 250 | 13 | 13 | 13 |
| Surface roughness | Ra [nm] on the surface in contact with the metal roll | | 95 | 87 | - | 80 | 70 | 80 | 86 |
| | Ra [nm] on the surface in contact with the touch roll | | 115 | 112 | - | 120 | 102 | 588 | 111 |
| Crystal structure | Crystallinity [%] | | 33 | 30 | - | 25 | 3 | 20 | 27 |
| | $\alpha$-type crystal ratio [mass%] | | 66 | 60 | - | 15 | 0 | 5 | 51 |
| Optical properties | Total light transmittance [%] | | 93 | 93.1 | - | 93.1 | 94.0 | 92.3 | 92.8 |
| | HAZE [%] before heating | | 1.4 | 1.2 | - | 1.7 | 0.6 | 36.9 | 1.6 |
| | HAZE [%] after heating | | 13.6 | 8.2 | - | 3.1 | 1 | 32.3 | 9.8 |
| | ΔHAZE [%] | | 12.2 | 7 | - | 1.4 | 0.4 | 4.6 | 8.2 |
| Evaluation | White turbidity during heating | | × | × | - | × | ○ | ○ | × |
| | Chemical resistance | Neutrogena Ultra Sheer SPF45 | ◎ | ◎ | - | ◎ | × | ◎ | ◎ |
| | | Engine oil HONDA Ultra U | ◎ | ◎ | - | ◎ | × | ◎ | ◎ |
| | Film formability | | ◎ | ◎ | × | ○ | ○ | ◎ | ◎ |

<2. Laminated film>

(2-1. Materials)

• For front surface layer

As a polyvinylidene fluoride-based resin (PVDF), a trade name Kynar 1000HD (PVDF homopolymer having a melting point of 168 °C) available from Arkema Co., Ltd. was prepared.

As a polymethacrylic acid ester-based resin (PMMA), SUMIPEX MGSS (polymethylmethacrylate with Tg of 101 °C) available from Sumitomo Chemical Co., Ltd. was prepared.

• For back surface layer

As a polyvinylidene fluoride-based resin (PVDF), a trade name Kynar720 (homopolymer of vinylidene fluoride, melting point 169 °C) available from Arkema Co., Ltd. was prepared.

As the polymethacrylic acid ester-based resin, a polymethacrylic acid ester-based resin of trade name Hypet HBS000 available from Mitsubishi Chemical Corporation containing a rubber component of butyl acrylate (n-BA) and butyl methacrylate (BMA) was prepared.

As a triazine-based ultraviolet absorber, trade name Tinuvin 1600 available from BASF was prepared.

As a crosslinked acrylic acid ester-based fine particles, GM-0105 (volume-based median particle diameter: 2 $\mu$m) available from Aica Kogyo Co., Ltd. was prepared. The volume-based median particle diameter of the crosslinked (meth) acrylic acid ester-based resin particles used as the raw material refers to the 50% by volume particle diameter of the volume-based cumulative particle size distribution curve measured by a laser diffraction / scattering method. In addition, since none of the particles had a particle size of less than 1 $\mu$m, the total amount blended in the raw material can be regarded as constituting crosslinked (meth) acrylic acid ester-based resin particles in the resin film.

(2-2. Preparation of film)

According to the test number, and according to the composition shown in Table 2, after kneading with a twin-screw extruder of $\varphi$30 mm, each compound for the front surface layer and the back surface layer was obtained. The compound for the front surface layer and the compound for the back surface layer were melt coextruded using two single-screw extruders of $\varphi$40 mm and a feed block type T-die multi-layer extruder with a feed block and T-die attached to the tip. The extruded film-shaped resin composition was sandwiched by a metal roll in which cooling water flowed and a rubber touch roll for cooling, thereby obtaining a film having a predetermined average thickness shown in Table 2. At this time, the temperature of the resin composition at the outlet (lip) of the T-die was 210 °C, and the time until one surface on the side of the front surface layer of the film was brought into contact with the surface of the metal roll (however, the touch roll in Comparative Example 12) after extrusion from the outlet of the T-die was fixed to 4 seconds. By changing the surface temperature of the metal roll ("Metal roll temperature" in the table), the crystallinity and the ratio of $\alpha$-type crystal of the resin composition constituting the front surface layer of the film were adjusted. Further, in Comparative Example 12, the surface roughness of the contact surface (on the side of the front surface layer) of the film with the touch roll was changed by changing the surface roughness of the touch roll. In Comparative Example 13, the surface roughness of the contact surface (on the side of the back surface layer) of the film with the touch roll was changed by changing the surface roughness of the touch roll.

(2-3. Average film thickness)

For each film (length 800 mm in the width direction) prepared under the above conditions, the cross section of the film was observed at a magnification of 2000 times using a laser microscope (VK-X100 available from Keyence), and the thickness of the film was measured based on the distance between the two points. The measurement was performed at 17 points in the film width direction (TD) at intervals of 50 mm at an arbitrary one location in the flow direction (MD), and the average value was taken as the measured value. The results are shown in Table 2.

(2-4. Surface roughness)

For each film prepared under the above conditions, the arithmetic mean roughness Ra according to JIS B0601: 2001 on both sides of the film was measured. The arithmetic mean roughness Ra was measured using a laser microscope (Keyence, VK-X100) under the condition of a magnification of 2000 times. The results are shown in Table 2. In addition, the arithmetic average roughness Ra on the surface of the metal roll according to JIS B0601: 2001 was measured by a contact type surface roughness meter (SJ210 available from Mitutoyo Corporation) and found to be 0.013 μm. The arithmetic average roughness Ra on the surface of the touch roll according to JIS B0601: 2001 was measured by a contact type surface roughness meter (SJ210 available from Mitutoyo Corporation) and found to be 0.116 μm (however, in Comparative Example 12, it was 3.712 μm).

(2-5. Crystallinity)

The crystallinity of the resin composition constituting the front surface layer of each film prepared under the above conditions was measured based on the enthalpy of crystal fusion by the method described above. For the conditions of the measurement of the enthalpy of crystal fusion, a DSC (DSC3100SA available from BRUKER) was used, and a 1.5 mg sample of the film was sealed in an aluminum pan and heated from room temperature to 200 °C at a temperature rise rate of 10 °C/min. The results are shown in Table 2. In addition, since the back surface layer contains a large amount of polymethacrylic acid ester-based resin, it was not crystallized. Therefore, the entropy of the crystal fusion obtained by the measurement in the state of the laminated film is evaluation substantially only for the crystal of the front surface layer.

(2-6. α-type crystal ratio)

For the resin composition constituting the front surface layer of each film prepared under the above conditions, the ratio of α-type crystal was measured based on the infrared absorption spectrum by the method described above. The infrared absorption spectrum was measured using FT-IR (FT/IR4600) available from JASCO Corporation under the condition of 64 times of integration. The results are shown in Table 2.

(2-7. Total light transmittance)

For each film prepared under the above conditions, a haze meter NDH7000 (available from NIPPON DENSHOKU INDUSTRIES Co., LTD) was used to determine the total light transmittance according to JIS K7375: 2008. The results are shown in Table 2.

(2-8. HAZE)

For each film prepared under the above conditions, a haze meter NDH7000 (available from NIPPON DENSHOKU INDUSTRIES Co., LTD) was used to measure the HAZE value (before heating) according to JIS K7136: 2000 at 25 °C. Next, each film prepared under the above conditions was heated in the air from 25 °C to 170 °C at an average temperature rise rate of 3.5 °C/sec, and within 1 second after reaching 170 °C, it was placed in a temperature environment of 25 °C and allowed to cool to 25 °C in the air. For the film that had been heated and cooled, the HAZE value (after heating) according to JIS K7136: 2000 was measured using a haze meter NDH7000 (available from NIPPON DENSHOKU INDUSTRIES Co., LTD). The results are shown in Table 2.

(2-9. Resistance to white turbidity)

For each film prepared under the above conditions, it was heated in the air to 170 °C at an average temperature rise rate of 3.5 °C/sec, and within 1 second after reaching 170 °C, it was placed in a temperature environment of 25 °C and allowed to cool to 25 °C in the air. The degree of white turbidity of the film before and after the heating was visually evaluated according to the following criteria. The results are shown in Table 2.

Circle (○): ... white turbidity could not be confirmed
Cross (x): ... white turbidity was confirmed

(2-10. Chemical resistance 1)

Each film prepared under the above conditions was cut into a 10 cm square, and 5 g of chemicals (sunscreen cream, trade name: Neutrogena Ultra Sheer SPF45) was applied to the surface of the film on the side which had been in contact with the surface of the metal roll (namely, the surface of the front surface layer). After left to stand at 55 °C for 4 hours, it was wiped off to check the appearance. The evaluation was performed according to the following criteria. The results are shown in Table 2.

Double circle (◎): no change in appearance
Circle (○): there were slight traces of chemical adhesion or slight wrinkles.

Cross (x): the film became cloudy, or greatly deformed.

(2-11. Chemical resistance 2)

For each film prepared under the above conditions, 0.2 mL of chemicals (engine oil, trade name: HONDA Ultra U) was dropped onto the surface on the side which had been in contact with the surface of the metal roll (namely, the surface of the front surface layer). After left to stand at room temperature for 1.5 hours, it was wiped off, and then left to stand at 80 °C for 3 hours, and then the appearance was checked. The evaluation was performed according to the following criteria. The results are shown in Table 2.

Double circle (◎): no change in appearance
Circle (○): there were slight traces of chemical adhesion or slight wrinkles.
Cross (x): the film became cloudy, or greatly deformed.

(2-12. Bleed out of ultraviolet absorber)

For each film prepared under the above conditions, a total of 4 cycles of cooling / heating cycle test were carried out, with exposure to an environment of -30 °C × 7h => 23 °C × 1h => 80 °C × 15h => 23 °C × 1h as one cycle. After the cooling / heating cycle test, observation was made with a laser microscope at a magnification of 2000 times to see whether the ultraviolet absorber bled out on the surface of the back surface layer. The results are shown in Table 2.

Circle (○): no bleed out
Cross (x): bleed out confirmed

(2-13. Film formability)

The film formability of each film prepared under the above conditions was evaluated according to the following criteria. The results are shown in Table 2.

Double circle (◎): no problem at all
Circle (○): film was able to be formed though perforation, etc. was slightly generated
Cross (x): difficult to form the film due to perforation or breakage of the film

(2-14. Peel strength with white polyvinyl chloride film)

On the back surface layer side of each film produced under the above conditions, a white polyvinyl chloride film (available from KYOWA LEATHER CLOTH CO., LTD.) was heat-laminated at a roll temperature of 140 °C and a line speed of 0.5 m / min. The obtained film on which the substrate was laminated was cut into a width of 10 mm, and using a STROGRAPH VE10 available from TOYO SEIKI co., LTD., a 180° peeling test was performed to peel the film from the white polyvinyl chloride film at a speed of 50 mm/min in the direction orthogonal to the width direction. The maximum value of the peel strength at this time was taken as the measured value. The results are shown in Table 2.

<Discussion>

In Examples 1 to 16, since the composition, crystallinity, ratio of α-type crystal, average thickness, and HAZE of the resin composition constituting the resin film were all suitable, resin films with high transparency, and which did not easily become cloudy even when heated and cooled were obtained. They were also excellent in chemical resistance. In Example 15, the surface roughness of the outer surface of the back surface layer was slightly larger than that of the other Examples due to addition of the crosslinked acrylic acid ester-based fine particles in the back surface layer. In Example 16, as the ratio of PVDF in the back surface layer increased, the compatibility with the ultraviolet absorber deteriorated, and bleed-out of the ultraviolet absorber was observed.
In Comparative Examples 1, 2, 8 and 9, since the composition of the resin composition constituting the resin film was inappropriate, the ratio of α-type crystal increased and white turbidity due to heating occurred.
In Comparative Examples 3 and 10, the average thickness of the resin film was too thin, which made film difficult to form.
In Comparative Examples 4 and 11, white turbidity was confirmed because the average thickness of the resin film was too thick.
In Comparative Example 5, since the composition of the resin composition constituting the resin film was inappropriate, the crystallinity of the resin composition constituting the resin film did not increase, and the chemical resistance was inferior.

In Comparative Example 6, the surface roughness of the contact surface of the resin film with the touch roll was large, and the transparency was insufficient.

In Comparative Example 12, the surface roughness on the outer surface of the front surface layer of the resin film was large, and the transparency was insufficient.

In Comparative Examples 7 and 14, the temperature of the metal roll during cooling was high, so that the ratio of $\alpha$-type crystal was high and white turbidity occurred.

In Comparative Example 13, the transparency was insufficient due to the excessive addition of the crosslinked acrylic acid ester-based fine particles and the large surface roughness on the outer surface of the back surface layer.

Table 2-1

| Composition | | | | | Example 7 | Example 8 | Example 9 | Example 10 | Example 11 | Example 12 |
|---|---|---|---|---|---|---|---|---|---|---|
| Composition | Front surface layer | PVDF [parts by mass] | Kynar 1000 HD | | 70 | 80 | 60 | 50 | 70 | 70 |
| | | Polymethacrylic acid ester-based resin [parts by mass] | SUMIPEX MGSS | | 30 | 20 | 40 | 50 | 30 | 30 |
| | Back surface layer | PVDF [parts by mass] | Kynar 720 | | 20 | 20 | 20 | 20 | 0 | 25 |
| | | Polymethacrylic acid ester-based resin [parts by mass] | Hypet HBS000 | | 80 | 80 | 80 | 80 | 100 | 75 |
| | | Ultraviolet absorber [parts by mass] | Tinuvin 1600 | | 2.1 | 2.1 | 2.1 | 2.1 | 2.1 | 2.1 |
| | | Cross-linked acrylic acid ester-based fine particles [parts by mass] | GM-0105 | | 0 | 0 | 0 | 0 | 0 | 0 |
| | | Metal roll temperature [°C] | | | 45 | 45 | 45 | 45 | 45 | 45 |
| Average thickness | | Front surface layer [$\mu$m] | | | 13 | 13 | 13 | 13 | 13 | 13 |
| | | Back surface layer [$\mu$m] | | | 27 | 27 | 27 | 27 | 27 | 27 |
| Surface roughness | | Arithmetic mean roughness of outer surface of front surface layer Ra [nm] | | | 80 | 83 | 78 | 75 | 82 | 81 |
| | | Arithmetic mean roughness of outer surface of back surface layer Ra [nm] | | | 102 | 104 | 102 | 103 | 97 | 118 |
| Crystal structure | | Crystallinity of front surface layer [%] | | | 21 | 24 | 19 | 16 | 21 | 22 |
| | | $\beta$-type crystal ratio of front surface layer [%] | | | 92 | 87 | 100 | 100 | 92 | 92 |
| | | $\alpha$-type crystal ratio of front surface layer [mass%] | | | 8 | 13 | 0 | 0 | 8 | 8 |
| Optical properties | | Total light transmittance [%] | | | 93.4 | 93.3 | 93.4 | 93.4 | 93.4 | 93.4 |
| | | HAZE [%] before heating | | | 1.2 | 1.7 | 0.9 | 0.8 | 1.1 | 1.2 |
| | | HAZE [%] after heating | | | 1.8 | 2.2 | 1.5 | 1.3 | 1.8 | 1.8 |
| | | $\Delta$HAZE [%] | | | 0.6 | 0.5 | 0.6 | 0.5 | 0.7 | 0_6 |

(continued)

| Evaluation | | | Example 7 | Example 8 | Example 9 | Example 10 | Example 11 | Example 12 |
|---|---|---|---|---|---|---|---|---|
| | White turbidity during heating | | ○ | ○ | ○ | ○ | ○ | ○ |
| | Chemical resistance | Neutrogena Ultra Sheer SPF45 | ◎ | ◎ | ○ | ○ | ◎ | ◎ |
| | | Engine oil HONDA Ultra U | ◎ | ◎ | ◎ | ◎ | ◎ | ◎ |
| | Cooling / heating cycle test | Ultraviolet absorber bleed out | ○ | ○ | ○ | ○ | ○ | ○ |
| | Film formability | | ◎ | ◎ | ◎ | ◎ | ◎ | ◎ |
| | Peel strength with white polyvinyl chloride film [N/mm] | | 10 | 10 | 10 | 10 | 12 | 9 |

Table 2-2

| | | | | Example 13 | Example 14 | Example 15 | Example 16 | Comparative Example 8 | Comparative Example 9 |
|---|---|---|---|---|---|---|---|---|---|
| Composition | Front surface layer | PVDF [parts by mass] | Kynar 1000 HD | 70 | 70 | 70 | 70 | 100 | 90 |
| | | Polymethacrylic acid ester-based resin [parts by mass] | SUMIPEX MGSS | 30 | 30 | 30 | 30 | 0 | 10 |
| | Back surface layer | PVDF [parts by mass] | Kynar 720 | 20 | 20 | 20 | 40 | 20 | 20 |
| | | Polymethacrylic acid ester-based resin [parts by mass] | Hypet HBS000 | 80 | 80 | 80 | 60 | 80 | 80 |
| | | Ultraviolet absorber [parts by mass] | Tinuvin1600 | 2.1 | 2.1 | 2.1 | 2.1 | 2.1 | 2.1 |
| | | Cross-linked acrylic acid ester-based fine particles [parts by mass] | GM-0105 | 0 | 0 | 3.0 | 0 | 0 | 0 |
| | | Metal roll temperature [°C] | | 45 | 45 | 45 | 45 | 45 | 45 |
| Average thickness | | Front surface layer [μm] | | 5 | 200 | 13 | 13 | 13 | 13 |
| | | Back surface layer [μm] | | 5 | 300 | 27 | 27 | 27 | 27 |
| Surface roughness | | Arithmetic mean roughness of outer surface of front surface layer Ra [nm] | | 82 | 78 | 81 | 83 | 94 | 90 |
| | | Arithmetic mean roughness of outer surface of back surface layer Ra [nm] | | 98 | 115 | 147 | 103 | 102 | 103 |
| Crystal structure | | Crystallinity of front surface layer [%] | | 20 | 24 | 22 | 21 | 33 | 30 |
| | | β-type crystal ratio of front surface layer [%] | | 93 | 87 | 93 | 92 | 31 | 38 |
| | | α-type crystal ratio of front surface layer [mass%] | | 7 | 13 | 7 | 8 | 69 | 62 |
| Optical properties | | Total light transmittance [%] | | 93.4 | 93.1 | 92.9 | 93.4 | 93.0 | 93.1 |
| | | HAZE [%] before heating | | 0.3 | 1.7 | 16.7 | 1.6 | 2.7 | 2 |
| | | HAZE [%] after heating | | 0.9 | 2.9 | 16.2 | 1.8 | 14.7 | 8.8 |
| | | ΔHAZE [%] | | 0.6 | 1.2 | 0.5 | 0.2 | 12 | 6.8 |

| Evaluation | | | Example 13 | Example 14 | Example 15 | Example 16 | Comparative Example 8 | Comparative Example 9 |
|---|---|---|---|---|---|---|---|---|
| | White turbidity during heating | | ○ | ○ | ○ | ○ | ✕ | ✕ |
| | Chemical resistance | Neutrogena Ultra Sheer SPF45 | ◎ | ◎ | ◎ | ◎ | ◎ | ◎ |
| | | Engine oil HONDA Ultra U | ◎ | ◎ | ◎ | ◎ | ◎ | ◎ |
| | Cooling / heating cycle test | Ultraviolet absorber bleed out | ○ | ○ | ○ | ✕ | ○ | ○ |
| | Film formability | | ○ | ○ | ◎ | ◎ | ◎ | ◎ |
| | Peel strength with white polyvinyl chloride film [N/mm] | | 10 | 10 | 10 | 4 | 10 | 10 |

Table 2-3

| | | | | Comparative Example 10 | Comparative Example 11 | Comparative Example 12 | Comparative Example 13 | Comparative Example 14 |
|---|---|---|---|---|---|---|---|---|
| Composition | Front surface layer | PVDF [parts by mass] | Kynar 1000 HD | 70 | 70 | 70 | 70 | 80 |
| | | Polymethacrylic acid ester-based resin [parts by mass] | SUMIPEX MGSS | 30 | 30 | 30 | 30 | 20 |
| | Back surface layer | PVDF [parts by mass] | Kynar 720 | 20 | 20 | 20 | 20 | 20 |
| | | Polymethacrylic acid ester-based resin [parts by mass] | Hypet HBS000 | 80 | 80 | 80 | 80 | 80 |
| | | Ultraviolet absorber [parts by mass] | Tinuvin1600 | 2.1 | 2.1 | 2.1 | 2.1 | 2.1 |
| | | Cross-linked acrylic acid ester-based fine particles [parts by mass] | GM-0105 | 0 | 0 | 0 | 15 | 0 |
| | | Metal roll temperature [°C] | | 45 | 45 | 45 | 45 | 65 |
| Average thickness | | Front surface layer [μm] | | 3 | 250 | 13 | 13 | 13 |
| | | Back surface layer [μm] | | 3 | 350 | 27 | 27 | 17 |
| Surface roughness Crystal structure | | Arithmetic mean roughness of outer surface of front surface layer Ra [nm] | | - | 77 | 639 | 85 | 80 |
| | | Arithmetic mean roughness of outer surface of back surface layer Ra [nm] | | 97 | 123 | 104 | 193 | 104 |
| | | Crystallinity of front surface layer [%] | | - | 24 | 22 | 25 | 26 |
| | | β-type crystal ratio of front surface layer [%] | | - | 92 | 96 | 97 | |
| | | α-type crystal ratio of front surface layer [mass%] | | - | 8 | 4 | 3 | 54 |
| Optical properties | | Total light transmittance [%] | | - | 93.1 | 92.8 | 93.5 | 92_9 |
| | | HAZE [%] before heating | | - | 3 | 41.2 | 30.1 | 1 8 |
| | | HAZE [%] after heating | | - | 4.2 | 38.7 | 29.2 | 9.5 |
| | | ΔHAZE [%] | | - | 1.2 | 2.5 | 0.9 | 7.7 |

(continued)

| Evaluation | | | Comparative Example 10 | Comparative Example 11 | Comparative Example 12 | Comparative Example 13 | Comparative Example 14 |
|---|---|---|---|---|---|---|---|
| | White turbidity during heating | | - | × | × | ○ | × |
| | Chemical resistance | Neutrogena Ultra Sheer SPF45 | - | ◎ | ◎ | ◎ | ◎ |
| | | Engine oil HONDA Ultra U | - | ◎ | ◎ | ◎ | ◎ |
| | | Ultraviolet absorber bleed out | - | ○ | ○ | ○ | ◎ |
| | Cooling / heating cycle test | | - | ○ | ◎ | ○ | ◎ |
| | Film formability | | × | ○ | ◎ | ◎ | ◎ |
| | Peel strength with white polyvinyl chloride film [N/mm] | | - | 10 | 9 | 10 | 10 |

Description of Reference Numerals

100 Resin film
110 Front surface layer
120 back surface layer

**Claims**

1. A resin film composed of a resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin,

    wherein a crystallinity of the resin composition is 15% to 35%;
    a ratio of α-type crystal to a total mass of α-type crystal and β-type crystal in the resin composition is 0 to 15% by mass;
    an average thickness of the resin film is 5 to 200 μm; and
    a HAZE measured according to JIS K7136: 2000 of the resin film is 20% or less.

2. The resin film according to claim 1, wherein an arithmetic average roughness Ra measured according to JIS B0601: 2001 on at least one surface is 100 nm or less.

3. The resin film according to claim 1 or 2, wherein the HAZE measured according to JIS K7136: 2000 is 5% or less.

4. The resin film according to any one of claims 1 to 3, wherein a total light transmittance measured according to JIS K7375: 2008 is 90% or more.

5. The resin film according to any one of claims 1 to 4, wherein when it is heated in an air from 25 °C to 170 °C with an average temperature rise rate of 3.5 °C/sec, then placed in a temperature environment of 25 °C within 1 second after reaching 170 °C, and allowed to cool to 25 °C in the air, an amount of change of the HAZE (ΔHAZE) measured according to JIS K7136: 2000 is 5% or less.

6. A resin film, comprising

    a front surface layer composed of a resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin; and
    a back surface layer composed of a resin composition comprising 0 to 30 parts by mass of a polyvinylidene fluoride-based resin and 70 to 100 parts by mass of a polymethacrylic acid ester-based resin with respect to a total of 100 parts by mass of the polyvinylidene fluoride-based resin and the polymethacrylic acid ester-based resin,
    wherein a crystallinity of the resin composition constituting the front surface layer is 15% to 35%;
    a ratio of α-type crystal to a total mass of α-type crystal and β-type crystal in the resin composition constituting the front surface layer is 0 to 15% by mass;
    an average thickness of the front surface layer is 5 to 200 μm;
    an average thickness of the back surface layer is 5 to 300 μm; and
    a HAZE measured according to JIS K7136: 2000 of the resin film is 20% or less.

7. The resin film according to claim 6, wherein an arithmetic average roughness Ra measured according to JIS B0601: 2001 on at least one of an outer surface of the front surface layer and an outer surface of the back surface layer is 100 nm or less.

8. The resin film according to claim 6 or 7, wherein the HAZE measured according to JIS K7136: 2000 is 5% or less.

9. The resin film according to any one of claims 6 to 8, wherein a total light transmittance measured according to JIS K7375: 2008 is 90% or more.

10. The resin film according to any one of claims 6 to 9, wherein when it is heated in an air from 25 °C to 170 °C with an average temperature rise rate of 3.5 °C/sec, then placed in a temperature environment of 25 °C within 1 second after reaching 170 °C, and allowed to cool to 25 °C in the air, an amount of change of the HAZE ($\Delta$HAZE) measured according to JIS K7136: 2000 is 5% or less.

11. The resin film according to any one of claims 6 to 10, wherein the resin composition constituting the back surface layer comprises 0.1 to 10 parts by mass of an ultraviolet absorber with respect to the total of 100 parts by mass of the polyvinylidene fluoride-based resin and the polymethacrylic acid ester-based resin.

12. The resin film according to claim 11, wherein the ultraviolet absorber contains a triazine-based compound, a benzotriazole-based compound, or a mixture thereof.

13. The resin film according to any one of claims 6 to 12, wherein the resin composition constituting the back surface layer comprises 0.1 to 10 parts by mass of crosslinked (meth) acrylic acid ester-based resin particles with respect to the total of 100 parts by mass of the polyvinylidene fluoride-based resin and the polymethacrylic acid ester-based resin.

14. The resin film according to any one of claims 1 to 13, which is used for laminating with a substrate.

15. The resin film according to claim 14, wherein a 60 ° specular glossiness measured according to JIS Z8741: 1997 on a surface of the substrate to be bonded to the resin film is 100 to 600, and an L* with an acceptance angle of 15 ° in an L*a*b* color space according to JIS Z8781-4: 2013 is 0 to 20.

16. The resin film according to any one of claims 1 to 13, which is used for thermoforming.

17. A method for producing a resin film, comprising:

    a step of melt extruding a resin composition from a T-die into a film having an average thickness of 5 to 200 $\mu$m at a temperature of 200 °C to 260 °C, the resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin; and
    within 6 seconds after extrusion from an outlet of the T-die, a step of bringing at least one surface of a melt extruded film into contact with a surface of a metal roll whose temperature is controlled to 30 to 50 °C for cooling.

18. A method for producing a resin film, comprising:

    a step of melt coextruding a first resin composition and a second resin composition from a T-die into a film at a temperature of 200 °C to 260 °C such that an average thickness of the first resin composition is 5 to 200 $\mu$m and an average thickness of the second resin composition is 5 to 300 $\mu$m,
    the first resin composition comprising 50 to 80 parts by mass of a polyvinylidene fluoride-based resin and 20 to 50 parts by mass of a polymethacrylic acid ester-based resin with respect to a total of 100 parts by mass of the polyvinylidene fluoride-based resin and the polymethacrylic acid ester-based resin,
    the second resin composition comprising 0 to 30 parts by mass of a polyvinylidene fluoride-based resin and 70 to 100 parts by mass of a polymethacrylic acid ester-based resin with respect to a total of 100 parts by mass of the polyvinylidene fluoride-based resin and the polymethacrylic acid ester-based resin; and
    within 6 seconds after extrusion from an outlet of the T-die, a step of bringing at least a surface on a side of the first resin composition of a melt coextruded film into contact with a surface of a metal roll whose temperature is controlled to 30 to 50 °C for cooling.

19. The method for producing a resin film according to claim 17 or 18, wherein an arithmetic average roughness Ra measured according to JIS B0601: 2001 on the surface of the metal roll is 100 nm or less.

FIG. 1

## INTERNATIONAL SEARCH REPORT

| International application No. |
| --- |
| PCT/JP2021/004177 |

### A. CLASSIFICATION OF SUBJECT MATTER
B32B 27/30(2006.01)i; C08K 5/3467(2006.01)i; C08L 27/16(2006.01)i; C08L 33/12(2006.01)i; C08J 5/18(2006.01)i; B29C 48/08(2019.01)i; B29C 48/21(2019.01)i; B29C 48/88(2019.01)i
FI: C08J5/18 CEW; B29C48/08; B29C48/21; B29C48/88; B32B27/30 A; B32B27/30 Z; C08L27/16; C08L33/12; C08K5/3467

According to International Patent Classification (IPC) or to both national classification and IPC

### B. FIELDS SEARCHED
Minimum documentation searched (classification system followed by classification symbols)
B32B27/30; C08K5/3467; C08L27/16; C08L33/12; C08J5/18; B29C48/08; B29C48/21; B29C48/88

Documentation searched other than minimum documentation to the extent that such documents are included in the fields searched
Published examined utility model applications of Japan          1922–1996
Published unexamined utility model applications of Japan        1971–2021
Registered utility model specifications of Japan                1996–2021
Published registered utility model applications of Japan        1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/059369 A1 (DENKA COMPANY LIMITED) 28 March 2019 (2019-03-28) claims, paragraphs [0042]– | 1, 3-6, 8-12, 14-18 |
| Y | [0052], examples | 2, 7, 13, 19 |
| X | WO 2011/142453 A1 (MITSUBISHI RAYON CO., LTD.) 17 November 2011 (2011-11-17) claims, paragraphs [0039]–[0041], [0046]–[0061], [0066], examples | 1-12, 14-19 |
| Y | | 2, 7, 13, 19 |
| Y | JP 2005-112972 A (SUMITOMO CHEMICAL CO., LTD.) 28 April 2005 (2005-04-28) claims, paragraphs [0021]–[0022], examples | 13 |

☐ Further documents are listed in the continuation of Box C.          ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 April 2021 (15.04.2021) | 27 April 2021 (27.04.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2021/004177 |

| Patent Documents referred in the Report | Publication Date | Patent Family | Publication Date |
| --- | --- | --- | --- |
| WO 2019/059369 A1 | 28 Mar. 2019 | CN 111093946 A claims, paragraphs [0090]-[0106], examples | |
| WO 2011/142453 A1 | 17 Nov. 2011 | US 8642159 B2 claims, column 5, line 58 to column 6, line 17, column 6, line 56 to column 8, line 31, column 9, lines 15-20, examples | |
| JP 2005-112972 A | 28 Apr. 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011142453 A
- JP 2012187934 A
- WO 2019107302 A